# EUROPEAN PATENT APPLICATION

(11) **EP 1 887 269 A1**
(43) Date of publication of application: **13.02.2008**
(21) Application number: 06016420.9
(22) Date of filing: 07.08.2006
(51) Int. Cl.: F16L 15/06, F16L 15/04

(54) **Composable pipework having a plurality of modular tubular ducts**

(71) Applicant: BEZA S.p.A., 37057 San Giovanni Lupatoto VR (IT)
(72) Inventor: Beghini, Claudio, 37057 San Giovanni Lupatoto (VR) (IT)
(74) Representative: Zardi, Marco

(57) **Abstract**

A composable pipework (10) having a plurality of modular tubolar ducts (11, 111, 211, 311) interconnected by means of a hermetic seal, head-tail connection, comprising a plurality of modular tubolar ducts (11, 111, 211, 311) and hermetic sealing means (18) provided in each head-tail connection of said tubular ducts (11, 111, 211, 311), each tubular duct (11, 111, 211, 311) comprising at least two ends (14, 114, 314; 16, 316a, 316b) equipped with respective threads (15, 115; 17) capable of allowing said hermetic seal, head-tail connection through screwing; at said hermetic seal, head-tail connections, the respective tubular ducts (11, 111, 211, 311) are rotatable between themselves through screwing.

## Description

### Field of application

The present invention refers, in its broadest aspect, to a composable pipework having a plurality of modular tubular ducts interconnected by means of a hermetic seal, head-tail connection, comprising a plurality of modular tubolar ducts and hermetic sealing means provided in each head-tail connection of said tubular ducts.

In the present patent application, the expression "tubular duct" means any element of a composable pipework that is capable of carrying a fluid between at least two of its ends, for example a rectilinear tube, a curvilinear tube, a "T" and "Y" joint, a tube with an inspection door.

More particularly, the invention refers to a composable pipework of the above-mentioned type, each tubular duct comprising at least two ends equipped with respective threads capable of allowing said hermetic seal, head-tail connection through screwing.

### Prior Art

In relation to the composable pipeworks of the above-mentioned type, consisting of a plurality of head-tail connected modular tubolar ducts, there is a well-known need that each connection be capable of ensuring both a preset mechanical seal and a preset hermetic seal.

In other words, the connection between two adjacent modular tubolar ducts must withstand preset mechanical stress (mechanical seal) over time, for example traction, compression and flexion, and must be capable of maintaining over time a preset, positive or negative, difference in pressure between the inside and the outside of the two connected tubular ducts (hermetic seal).

In order to ensure mechanical seal, the head-tail connection between two adjacent modular tubolar ducts is carried out by means of two respective threads.

More precisely, each modular tubolar duct provides a male threaded end and an opposed female threaded end, of conjugate dimensions so that the two tubular ducts may easily and quickly be connected, by screwing the male threaded end of a first tubular duct into the female thread of a second tubular duct.

In order to ensure the hermetic seal, in each connection between two adjacent tubular ducts, gaskets of various types are provided, according to the applications (transport of a liquid, of a gas or both), the difference in pressure between the inside and the outside of the pipework in operation and the viscosity of the liquid possibly transported.

In general, said gaskets are ring-shaped, in an adequate plastic material, and are housed in respective seats, of the male end for example. When the male threaded end of a first tubular duct is fully screwed into the female thread of a second tubular duct, the gasket - placed between the outside of the male end of the first tubular duct and the inside of the female end of the second tubular duct - turns out to be in pressure contact against opposite walls of the two connected tubular ducts.

Although advantageous from different points of view, a composable pipework having a plurality of modular tubolar ducts structured in the above schematically described manner, has known drawbacks, among which the main one is that, in order to ensure the wanted hermetic seal, maximum care must be taken so that the male end of each tubular duct is fully screwed into the female end of the tubular duct connected to it.

A further disadvantage of the composable pipework of the prior art is that the dimensions of the individual modular ducts must be studied and made accurately during the design and manufacture phases that precede the laying of the pipework itself, and in practice deviations from the designed arrangement are not allowed.

### Summary of the invention

The technical problem underlying the present invention is to devise and provide a composable pipework having a plurality of modular tubolar ducts of the considered type, capable of meeting the above-mentioned need, allowing at the same time great ease and versatility of assembly between the modular tubolar ducts, in order to overcome, in an easy and economical manner, the limitations and the drawbacks mentioned in reference to the prior art.

This problem is solved, according to the present invention, by a composable pipework having a plurality of modular tubolar ducts interconnected by a hermetic seal, head-tail connection, comprising a plurality of modular tubolar ducts and hermetic sealing means provided in each head-tail connection of said tubular ducts, each tubular duct comprising at least two ends equipped with respective threads capable of allowing said hermetic seal, head-tail connection through screwing, characterized in that, at said head-tail, hermetic seal connections, the respective tubular ducts are rotatable between themselves through screwing.

Further characteristics and the advantages of the composable pipework having a plurality of modular tubolar ducts according to the present invention will result from the description below of a preferred embodiment thereof, provided for indicating and not limiting purposes with reference to the attached drawings.

### Brief description of the drawings

Figure 1 schematically represents a side elevation view of a first embodiment of a modular tubolar duct being part of the composable pipework according to the invention.
Figure 2 schematically represents a side elevation view of two of the modular tubolar ducts of figure 1, in a head-tail mutual approach phase.
Figure 3 schematically represents a side elevation view of two of the modular tubolar ducts of figure 1, in a position of minimum mutual screwing, in mechanical and hermetic seal.
Figure 4 schematically represents a side elevation view of two of the modular tubolar ducts of figure 1, in a position of maximum mutual screwing, in mechanical and hermetic seal.
Figure 5 schematically represents a side elevation view, partially sectioned, of a second embodiment of a modular tubolar duct being part of the composable pipework according to the invention.
Figure 6 schematically represents a side elevation view of a third embodiment of a modular tubolar duct being part of the composable pipework according to the invention.
Figure 7 schematically represents a side elevation view of a fourth embodiment of a modular tubolar duct being part of the composable pipework according to the invention.

### Detailed description of a preferred embodiment

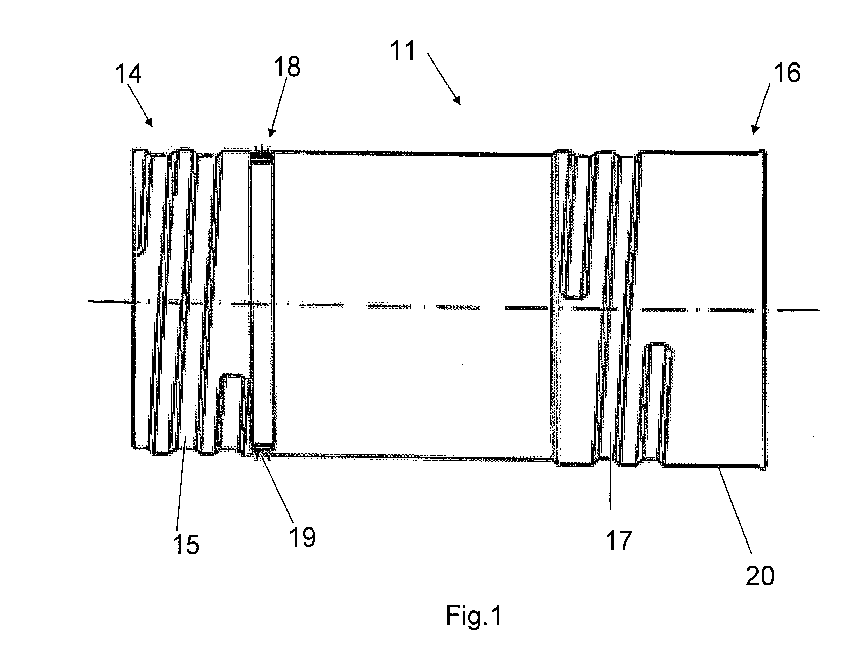

Initially referring to figures 1-4, a first embodiment of a modular tubolar duct is shown, which is indicated by 11 and is part of a composable pipework according to the invention, globally indicated by 10.

Each tubular duct 11 comprises a male end 14 having a respective thread 15 and/or a female end 16 having a respective thread 17.

More precisely, the duct 11 of figures 1-4 is a rectilinear tube which comprises a male end 14 and an opposed female end 16.

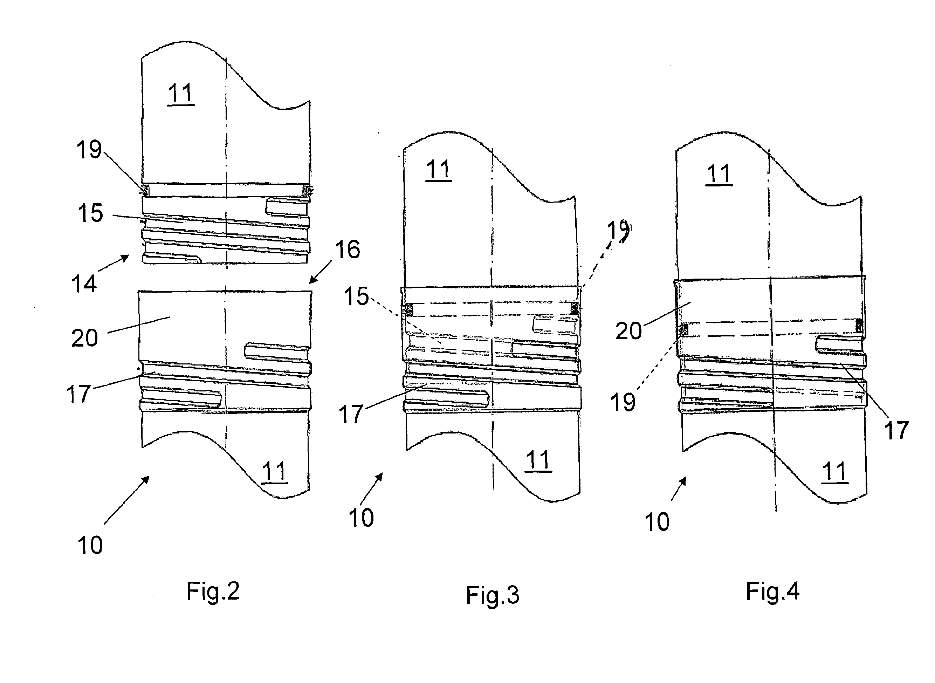

The above-mentioned threads 15 and 17 are conjugate and capable of allowing a head-tail connection between adjacent modular tubolar ducts 11 (figures 3 and 4) through screwing.

Hermetic sealing means 18 are associated with each head-tail connection between said adjacent ducts 11.

According to one aspect of the present invention, the female end 16 comprises an internally smooth cylindrical mouth 20, of preset axial length, followed by the respective thread 17, said mouth 20 having an inside diameter greater than the maximum outside diameter of said male end 14.

Furthermore, according to a further aspect of the present invention, the hermetic sealing means 18 are arranged on said male end 14, in a position that follows the respective thread 15, in order to achieve said hermetic seal between a position of minimum screwing and a position of maximum screwing of said adjacent ducts 11 by means of pressure contact against the inside of said cylindrical mouth 20 of the female end 16.

In general, the pipework 10 has a plurality of ducts 11 interconnected by means of a hermetic seal, head-tail connection and comprises a plurality of modular tubolar ducts 11 and hermetic sealing means 18 provided in each head-tail connection of said tubular ducts 11. Each tubular duct 11 comprises at least two ends, 14 and 16, equipped with respective threads, 15 and 17, capable of allowing said hermetic seal, head-tail connection through screwing.

According to the present invention, at said hermetic seal, head-tail connections, the respective tubular ducts 11 are rotatable between themselves through screwing.

Preferably, said respective tubular ducts 11 are rotatable by at least 270°, preferably at least 360°.

In the non-limiting example shown in figures 1-4, the mechanical seal is achieved by screwing the male end 14 into the female end 16 through a circle angle, after which a 360° rotation is still allowed.

According to a first embodiment of the present invention, shown in figures 1-4, the above-mentioned hermetic sealing means 18 comprise an annular gasket 19 worn and detained on said male end 14.

Preferably, the annular gasket 19 is positioned at a distance from the edge of the male end 14 of the respective modular tubolar duct 11 substantially equal to the axial length of said mouth 20 of the female end 16 of the adjacent modular tubolar duct 11.

In this manner, the annular gasket 19 of a first modular tubolar duct 11 turns out to be maintained under pressure on the internally smooth cylindrical mouth 20 of the female end 16 of a second modular tubolar duct 11 adjacently connected, from a minimum mutual screwing configuration of said adjacent modular tubolar ducts 11 (figure 3), up to the maximum mutual screwing configuration of said adjacent modular tubolar ducts 11 (figure 4).

Preferably, the annular gasket 19 is housed in an adequate circumferential seat provided on the external wall of said male end 14, substantially close to the respective thread 15.

The annular gasket 19 has such dimensions that it turns out to be projecting compared to the maximum outside diameter of said male end 14: more precisely, the annular gasket 19 has an outside diameter greater than the inside diameter of the internally smooth cylindrical mouth 20 of the female end 16.

Furthermore, the annular gasket 19 is made of a elastically deformable material, for example a plastic material or high-temperature, condensate-resistant silicone rubber, so that - in the head-tail connection of two tubular ducts 11 - a part of it is elastically deformed and is maintained under pressure against the inside of said internally smooth cylindrical mouth 20.

In the example of figures 1-4, the annular gasket 19 provides three circumferential ribs in a elastically deformable material, for example a plastic material or high-temperature, condensate-resistant silicone rubber, said three circumferential ribs having an outside diameter greater than the inside diameter of the internally smooth cylindrical mouth 20 to ensure the pressure seal. Obviously, the number of the circumferential ribs of the annular gasket 19 may vary depending on the operating conditions, and in some cases it is enough to provide even just one circumferential rib of the above-mentioned type.

In alternative, the annular gasket 19 has a circular cross section.

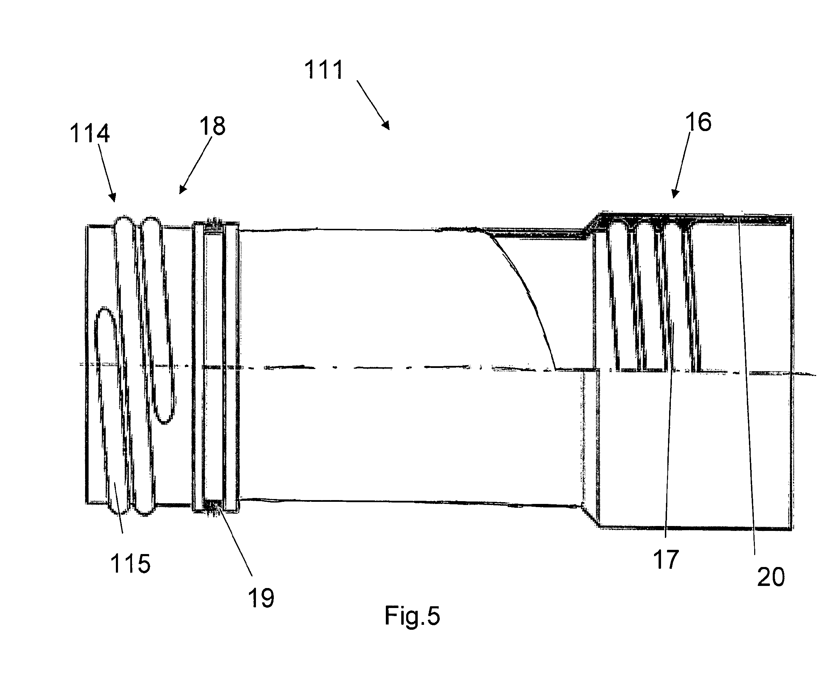

In figure 5 a second embodiment of a modular tubolar duct is shown, which is indicated by 111 and is part of a composable pipework according to the invention. In figure 5, to structural elements identical or equivalent from a functional point of view to those of the above described duct 11 of figures 1-4, the same reference numerals will be assigned and these will not be further described.

The duct 111 differs from the duct 11 only by the fact that the thread 115 of the male end 114 is formed outside the male end 114 itself, i.e. the bottom of the thread 115 has a diameter for example substantially equal to the outside diameter of the portion of the male end 114 without thread 115, while the thread 15 of the male end 14 is formed in the thickness of the male end 14 itself, i.e. the bottom of the thread 15 has a diameter lesser than the outside diameter of the male end 14.

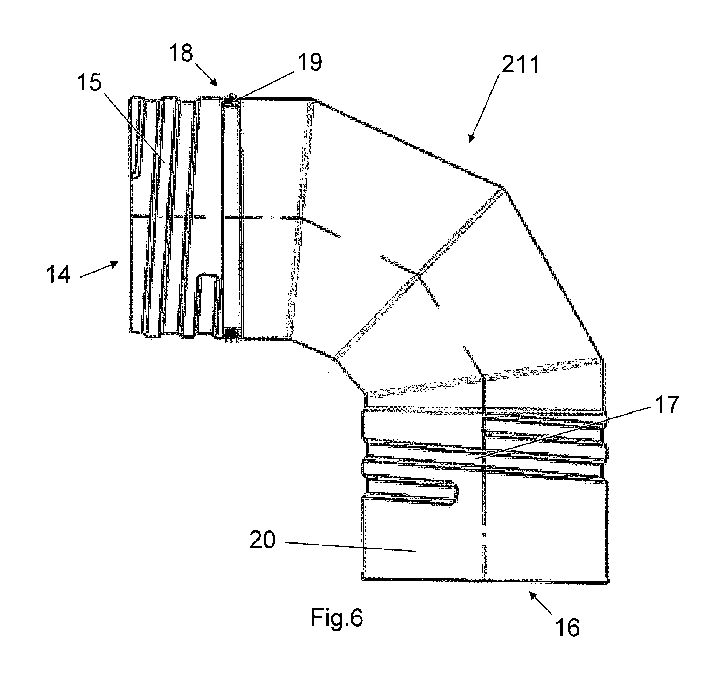

In figure 6 a third embodiment of a modular tubolar duct is shown, which is indicated by 211 and is part of a composable pipework according to the invention. In figure 6, to structural elements identical or equivalent from a functional point of view to those of the above-described tubular duct 11 of figures 1-4, the same reference numerals will be assigned and these will not be further described.

The tubular duct 211 differs from the tubular duct 11 only by the fact that the duct 11 is rectilinear, while the duct 211 is curvilinear, in particular the axes of the male 14 and female 16 ends of the tubular duct 211 are - in the non-limiting example of figure 6 - orthogonal between themselves.

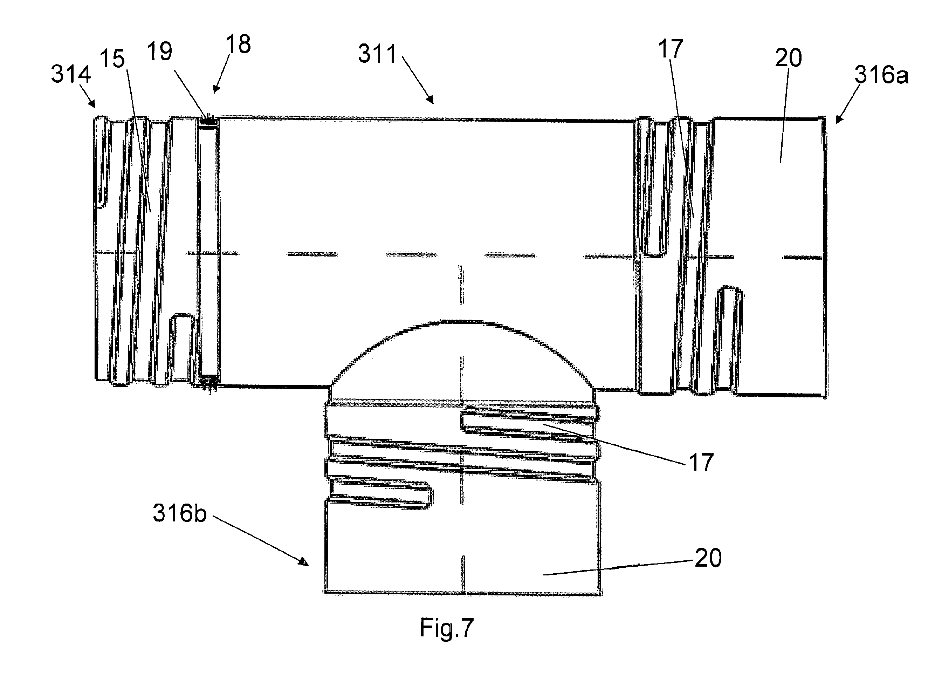

In figure 7 a fourth embodiment of a modular tubolar duct is shown, which is indicated by 311 and is part of a composable pipework according to the invention. In figure 7, to structural elements identical or equivalent from a functional point of view to those of the above-described duct 11 of figures 1-4, the same reference numerals will be assigned and these will not be further described.

The duct 311 differs from the duct 11 by the fact that it is a "T" joint, therefore equipped with three ends, while the element 11 is a tube, therefore equipped with two ends.

In particular, the duct 311 has two female ends (316a and 316b) and one male end 314, which are structurally identical to those of the duct 11.

The present invention also refers to the modular tubular ducts 11, 111, 211 and 311 of the above-described type.

From the preceding description, it can clearly be seen that the composable pipework having a plurality of modular tubolar ducts according to the invention solves the technical problem and achieves numerous advantages, the first of which lies in the fact that an unusual ease and versatility of assembly between the adjacent elements of the pipework itself is allowed.

In fact, thanks to the characteristic of being able to rotate, through screwing, the adjacent tubular ducts at the hermetic seal, head-tail connections, by screwing more or less the male end of a tubular duct into the female end of an adjacent duct, in practice it is possible to increase or respectively decrease the effective laying length of the tubular ducts, the hermetic seal of the connection being ensured in any case.

Furthermore, it is possible to orientate at will a tubular duct with respect to the other, by means of the mutual screwing, thus allowing making pipeworks with a high degree of flexibility, for example it is possible to lay the pipework without having conducted an accurate survey of the environment where the pipework itself is to be positioned, and the tubular ducts may have relatively broad manufacturing tolerances on the length, thus reducing production costs. In particular, the above-mentioned orientability is very advantageous when rectilinear tubes must be connected to curvilinear fitting tubes, or rectilinear tubes with other modular tubolar ducts such as "T" joints and "Y" joints.

A further advantage is that the cylindrical mouth of the female end, besides cooperating to the hermetic seal of the head-tail connection between two tubular ducts, has a function of guiding the male end of the tubular duct to be connected.

Of course, a man skilled in the art can make numerous modifications and variants to the composable pipework, having a plurality of modular tubolar ducts, described above in order to satisfy specific and contingent needs, all of which are in any case covered by the scope of protection of the present invention as defined by the following claims.

## Claims

1. Composable pipework (10) having a plurality of modular tubolar ducts (11, 111, 211, 311) interconnected by means of a hermetic seal, head-tail connection, comprising a plurality of modular tubolar ducts (11, 111, 211, 311) and hermetic sealing means (18) provided in each head-tail connection of said tubular ducts (11, 111, 211, 311), each tubular duct (11, 111, 211, 311) comprising at least two ends (14, 114, 314; 16, 316a, 316b) equipped with respective threads (15, 115; 17) capable of allowing said hermetic seal, head-tail connection through screwing, **characterized in that**, at said hermetic seal, head-tail connections, the respective tubular ducts (11, 111, 211, 311) are rotatable between themselves through screwing.

2. Composable pipework (10) according to claim 1, **characterized in that** said respective tubular ducts (11, 111, 211, 311) are rotatable by at least 270°.

3. Composable pipework (10) according to claim 1, **characterized in that** a first (16, 316a, 316b) of said threaded ends, so-called female end, of a first of said modular tubolar ducts (11, 111, 211, 311) comprises an internally smooth cylindrical mouth (20), of preset axial length, followed by the respective thread (17), said mouth (20) having an inside diameter greater than the maximum outside diameter of a second (14, 114, 314) of said threaded ends, so-called male end, of an adjacent second of said modular tubolar ducts (11, 111, 211, 311), head-tail connected to said first modular tubolar duct (11, 111, 211, 311), said hermetic sealing means (18) being arranged on said male end (14, 114, 314), in a position that follows the respective thread (15, 115), in order to achieve said hermetic seal between a position of minimum screwing and a position of maximum screwing of said adjacent modular tubolar ducts (11, 111, 211, 311) by means of pressure contact against the inside of said cylindrical mouth (20) of the female end (16, 316a, 316b).

4. Composable pipework (10) according to claim 3, **characterized in that** said hermetic sealing means (18) comprise an annular gasket (19) worn and detained on said male end (14, 114, 314).

5. Composable pipework (10) according to claim 4, **characterized in that** said annular gasket (19) is positioned at a distance from the edge of the male end (14, 114, 314) of the respective modular tubolar element (11, 111, 211, 311) substantially equal to the axial length of said mouth (20) of the female end (16, 316a, 316b) of the adjacent modular tubolar element (11, 111, 211, 311).

6. Composable pipework (10) according to claim 4 or 5, **characterized in that** said annular gasket (19) is housed in an adequate circumferential seat provided on the external wall of said male end (14, 114, 314), substantially close to the respective thread (15, 115).

7. Composable pipework (10) according to any one of claims 4 to 6, **characterized in that** said annular gasket (19) has such dimensions that it turns out to be projecting compared to the maximum outside diameter of said male end (14, 114, 314).

8. Composable pipework (10) according to claim 7, **characterized in that** said annular gasket (19) has an outside diameter greater than the inside diameter of the internally smooth cylindrical mouth (20).

9. Composable pipework (10) according to any one of claims 4 to 8, **characterized in that** the annular gasket (19) is made of a elastically deformable material, preferably a plastic material or high-temperature, condensate-resistant silicone rubber.

10. Composable pipework (10) according to any one of claims 4 to 7, **characterized in that** said annular gasket (19) has at least one circumferential rib in a elastically deformable material, preferably a plastic material or high-temperature, condensate-resistant silicone rubber, said at least one circumferential rib having an outside diameter greater than the inside diameter of the internally smooth cylindrical mouth (20).

11. Composable pipework (10) according to any one of claims 3 to 10, **characterized in that** at least one of said modular tubolar elements (11, 111, 211) is a tube which comprises a male end (14, 114) and an opposed female end (16).

12. Composable pipework (10) according to any one of claims 3 to 11, **characterized in that** the thread (15) of the male end (14) of said modular tubolar element (11, 211) is formed in the thickness of the male end (14) itself, i.e. the bottom of said thread (15) has a diameter lesser than the outside diameter of the male end (14).

13. Composable pipework (10) according to any one of claims 3 to 11, **characterized in that** the thread (115) of the male end (114) of said modular tubolar element (111) is formed outside the male end (114) itself.

14. Modular tubolar duct (11, 111, 211, 311) for composable pipework (10), of the type comprising a male end (14, 114, 314) having a respective thread (15, 115) and a female end (16, 316a, 316b) having a respective thread (17), said threads (15, 115, 17) having conjugable dimensions and capable of allowing a head-tail connection between two of said modular tubolar ducts (11, 111, 211, 311) through screwing, **characterized in that** said female end (16, 316a, 316b) comprises an internally smooth cylindrical mouth (20), of preset axial length, followed by the respective thread (17), said mouth (20) having an inside diameter greater than the maximum outside diameter of said male end (14), and **in that** hermetic sealing means (18) are arranged on said male end (14, 114, 314), in a position that follows the respective thread (15, 115), so that, once two of said adjacent modular tubolar ducts (11, 111, 211, 311) are head-tail connected, said hermetic seal is achievable between a position of minimum screwing and a position of maximum screwing of said two adjacent modular tubolar ducts (11, 111, 211, 311) by means of pressure contact against the inside of said cylindrical mouth (20) of the female end (16, 316a, 316b).
